# EUROPEAN PATENT SPECIFICATION

(11) **EP 2 275 290 B1**
(45) Date of publication and mention of the grant of the patent: **10.04.2013**
(21) Application number: 09165542.3
(22) Date of filing: 15.07.2009
(51) Int. Cl.: B60G 5/03, B60G 11/10, B60G 5/053, B60G 11/04

(54) **Multifunctional support for a cantilever spring suspension in a vehicle, especially with two axles**
Multifunktionsstütze für eine Auslegerfederaufhängung in einem Fahrzeug, insbesondere mit zwei Achsen
Support multifonction pour suspension à ressort de cantilever dans un véhicule, spécialement avec deux axes

(43) Date of publication of application: 19.01.2011
(73) Proprietor: IVECO MAGIRUS AG, 89079 Ulm (DE)
(72) Inventor: Eisenhardt, Daniel, 89077 Ulm (DE)
(74) Representative: Borsano, Corrado

(56) References cited:
- WO-A-03/072377
- DE-A1-102005 028 309
- GB-A- 946 394
- US-A- 2 351 001
- US-A- 2 951 709
- US-A- 4 871 188

## Description

### Field of the invention

The present invention relates to a multifunctional support for a cantilever spring suspension in a vehicle, especially with two axles.

### Description of the prior art

A cantilever spring suspension system for a vehicle, especially a heavy vehicle with two axles connected to the suspension, can be of the known type in which the springs are fixed at the middle to the holding structure connected to the vehicle frame. The two flexible ends of the leaf springs are connected to two respective axles of the vehicle, which axles can be both driving axles.

The holding structure of this type of cantilever spring suspension system comprises a high number of parts and components, to be manufactured separately, and assembled on the vehicle frame, with a high total weight increase on the vehicle, high manufacturing costs and time consuming assembling procedures. Generally these parts are not optimized also in terms of torsional stresses, and vertical, horizontal, lateral forces generated by the vehicle axles especially when running.

High costs are also generated for maintenance, replacement of parts and repairing procedures.

DE-102005028309-A1 discloses a multifunctional support for a cantilever spring suspension comprising: a transversal central part with two longitudinally elongated terminations; two substantially vertical elongated arms (3, 4); two substantially horizontal pivoting extensions for supporting the cantilever springs. The pivoting extensions depart along the two elongated arms, towards the outside of the multifunctional support, and have a cylindrical shape.

### Summary of the invention

The main object of the present invention to provide a multifunctional support for a cantilever spring suspension in a vehicle, especially with two axles, able to overcome the above mentioned drawbacks of the known solutions.

It is a particular object of the present invention a multifunctional support for a cantilever spring suspension in a vehicle, especially with two axles, the multifunctional support comprising:
- a transversal central part, with two longitudinally elongated terminations to be connected to respective elongated longitudinal members of a frame of the vehicle;
- two substantially vertical elongated arms with respective holding termination, under said two longitudinally elongated terminations;
- two substantially horizontal pivoting extensions departing along the two substantially vertical elongated arms, towards the outside of the multifunctional support.

These and further objects are achieved by means of a multifunctional support for a cantilever spring suspension in a vehicle, especially with two axles, as described in the attached claims, which are considered an integral part of the present description.

### Brief description of the drawings

The invention will become fully clear from the following detailed description, given by way of a mere exemplifying and non limiting example, to be read with reference to the attached drawing figures, wherein:
- Figures 1 and 2 show two lateral prospective views of the multifunctional casting support subject of the invention;
- Figures 3 and 4 show two lateral prospective views of the connections of the multifunctional casting support to the vehicle frame and to other vehicle elements.

The same reference numerals and letters in the figures designate the same or functionally equivalent parts.

### Description of the preferred embodiment

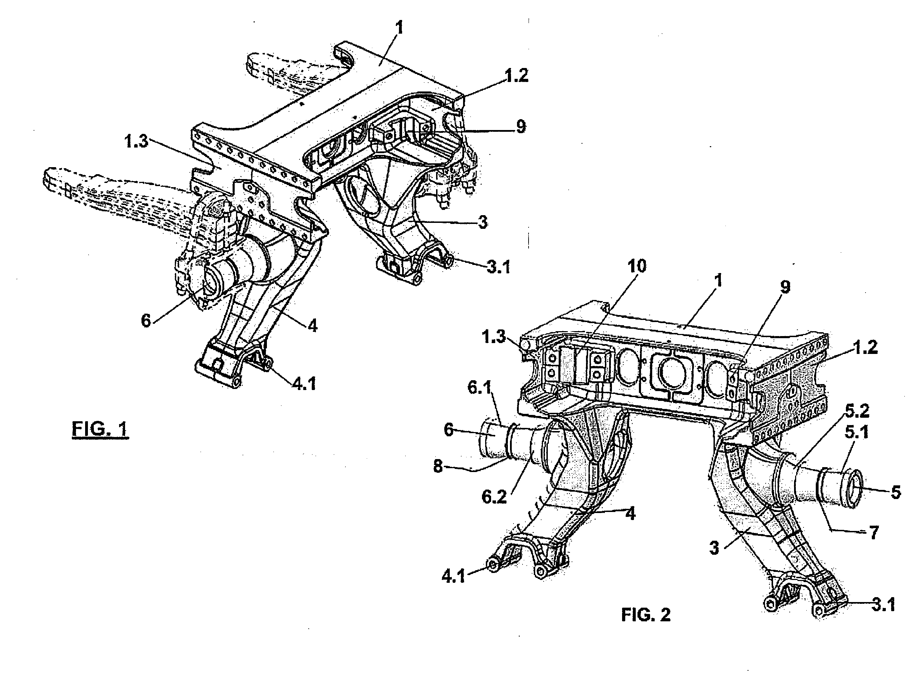

As shown more particularly in figures 1 and 2, the multifunctional support is in the form of a one-piece Π -shaped structure.

The structure comprises a transversal central part 1, preferably with a double-T cross section, with two longitudinally elongated terminations 1.2, 1.3 to be fitted with and connected to the elongated longitudinal members 2 of the vehicle frame, for example by screws. The transversal central part is preferably longitudinally divided in two halves connected together.

Close to the two longitudinally elongated terminations 1.2, 1.3, inside the double-T cross section, there are respective holding extensions 9, 10 obliquely oriented with respect to the central part. Those visible in the figures are at one side of the double-T cross section, two other holding extensions are placed at the other side to the opposite direction.

Under the two longitudinally elongated terminations 1.2, 1.3 of the central part there are connected two substantially vertical elongated arms 3 and 4 with respective holding termination 3.1, 4.1, preferably with an overturned-U shape.

Along the two elongated arms there are connected two respective substantially horizontal pivoting extensions 5, 6, towards the outside of the support.

The lateral surface of the pivoting extensions comprises two truncated conical parts 5.1, 5.2 and 6.1, 6.2, facing to each other, with a central annular groove 7, 8. The global shape of the contour around the groove is concave, or it could also be convex.

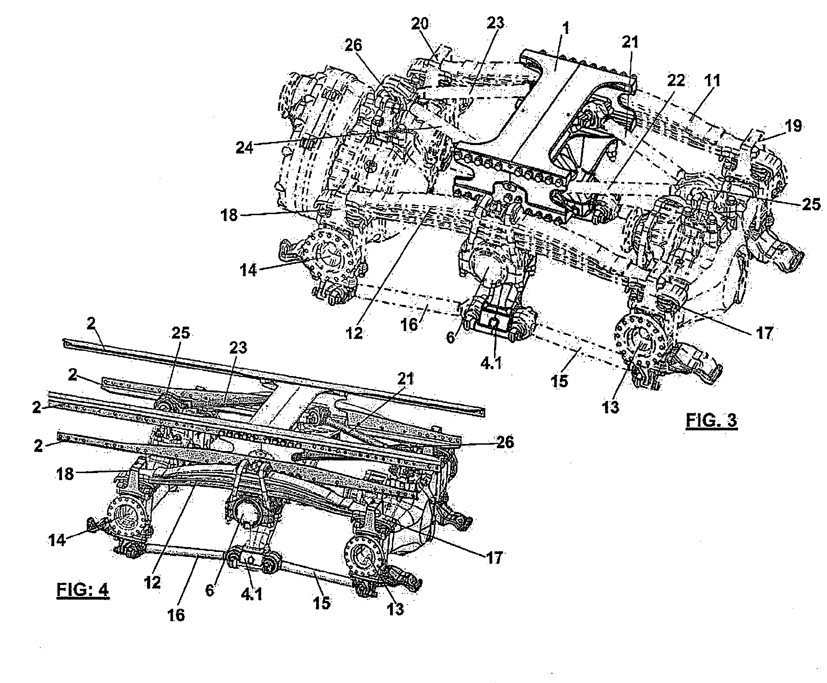

Figures 3 and 4 show two cantilever springs 11, 12 and two vehicle axles 13, 14, one or both of them eventually of the driving type.

The two cantilever springs 11, 12 are firmly connected in approximately the central part to the respective horizontal pivoting extensions 5, 6 of the multifunctional support. The particular shape of the contour of the pivoting extensions avoids the lateral shifting out of the cantilever springs. The flexible ends of the cantilever springs abut against and rub over the upper sides of the terminations of the vehicle axles 13, 14, through respective spring supports 17, 18, 19, 20.

Longitudinal rods 15, 16 (those visible in the figures are placed on one side of the structure, other respective two longitudinal rods are placed on the other side and not visible in the figures) are connected at one end to the respective overturned U-shaped holding terminations 3.1, 4.1 of the vertical elongated arms 3 and 4, and at the other end to the lower sides of the terminations of the vehicle axles 13, 14, through ball joints. There are totally four longitudinal rods able to counteract longitudinal braking forces and stresses on the axles.

Two couples of transversal rods 21, 22, 23, 24 are connected at one end to respective holding extensions 9, 10 inside the double-T cross section of the central part of the support, and at the other end to two upper supports 25, 26 emerging centrally from the upper side of the axles 13, 14, through ball joints. The two couples of transversal rods form two v-shaped connections between the multifunctional support and the two axles, able to counteract lateral forces and stresses on the axles.

The multifunctional support is preferably manufactured in a one-piece cast iron.

The advantages deriving from the use of this multifunctional support are evident.

The multifunctional support performs a number of functions, including the fixation of the transversal rods, the fixation of the longitudinal rods, the cantilever spring support (on pivot), the fixation to the frame, and the crossmember between the two axles. In the known solutions instead the equivalent functions are performed with a high number of parts assembled together: there can be about fifteen parts, plus several screws needed.

The benefit of weight is estimated as possibly ranging from about 150 kg to 240 kg.

More specifically, the functions of the multifunctional support are:
- leading all driving forces (such as braking, cornering (slow curve etc.), vertical dynamic loads, torsional displacement) from the axles to the frame. More specifically the lateral forces of the suspension are lead to the frame via the transversal rods. Because of that effect, the forces are no longer leaded into the frame via the springs, and so, many parts are optimized regarding weight and cost.
- fixation of the frame
- fixation of the transversal rods, counteracting braking forces, lateral forces when cornering;
- fixation of the longitudinal rods, counteracting braking forces;
- spring support at the pivot, counteracting vertical forces.

The multifunctional support can be used for the application of tandem rear axle suspension, most commonly used for off-road vehicles and construction vehicles (e. g. concrete mixers, tippers).

## Claims

1. Multifunctional support of a cantilever spring suspension in a vehicle, especially with two axles, the multifunctional support comprising:
- a transversal central part (1), with two longitudinally elongated terminations (1.2, 1.3) to be connected to respective elongated longitudinal members (2) of a frame of the vehicle;
- two substantially vertical elongated arms (3, 4) with respective holding termination (3.1, 4.1), under said two longitudinally elongated terminations (1.2, 1.3);
- two substantially horizontal pivot extensions (5, 6) departing along the two substantially vertical elongated arms, towards the outside of the multifunctional support;
said multifunctional support being **characterized in that** said two substantially horizontal pivot extensions (5, 6) have a lateral surface comprising two truncated conical parts (5.1, 5.2; 6.1, 6.2), facing to each other, with a central annular groove (7, 8), the global shape of the contour around the groove being concave or convex, said cantilever springs (11, 12) being firmly connected approximately to the central part of respective one of said two horizontal pivoting extensions.

2. Multifunctional support according to claim 1, wherein said transversal central part (1) has a double-T cross section, and comprises holding extensions (9, 10) obliquely oriented with respect to said transversal central part, inside said double-T cross section, close to said longitudinally elongated terminations (1.2, 1.3), said holding extensions (9, 10) being able to connect one end of two couples of transversal rods (21, 22, 23, 24), the other end connecting to two upper supports (25, 26) emerging centrally from the upper side of said axles (13, 14).

3. Multifunctional support according to claim 1, wherein said holding terminations (3.1, 4.1) of said two substantially vertical elongated arms (3, 4) being able to connect one end of longitudinal rods (15, 16), the other end of the longitudinal rods being connected to the lower sides of the terminations of said axles (13, 14).

4. Multifunctional support according to claim 2, wherein said double-T cross section of the transversal central part (1) is longitudinally divided in two halves connected together.

5. Multifunctional support according to claim 1, wherein said holding termination (3.1, 4.1) of the two substantially vertical elongated arms (3, 4) have an overturned-U shape.

6. Multifunctional support according to any of the preceding claims, in the form of a one-piece cast iron Π - shaped structure.

## Patentansprüche

1. Multifunktionsstütze mit Auslegerfederaufhängung in einem Fahrzeug, insbesondere mit zwei Achsen, wobei die Multifunktionsstütze umfasst:
- einen in Querrichtung verlaufenden zentralen Abschnitt (1) mit zwei in Längsrichtung verlängerten Enden (1.2, 1.3) zur Verbindung mit jeweiligen länglichen Längselementen (2) eines Rahmens des Fahrzeugs;
- zwei im Wesentlichen vertikale längliche Arme (3, 4) mit einem jeweiligen Halteende (3.1, 4. 1) unter den zwei in Längsrichtung verlängerten Enden (1.2, 1.3);
- zwei im Wesentlichen horizontale Drehverlängerungen (5, 6), die sich entlang der zwei im Wesentlichen vertikalen länglichen Arme in Richtung der Außenseite der Multifunktionsstütze erstrecken;
wobei die Multifunktionsstütze **dadurch gekennzeichnet ist, dass** die zwei im Wesentlichen horizontalen Drehverlängerungen (5, 6) eine Querfläche aufweisen, die zwei kegelstumpfförmige Abschnitte (5.1, 5.2; 6.1, 6.2), die einander gegenüberliegen, mit einer zentralen ringförmigen Rille (7, 8) umfasst, wobei die Gesamtform der Kontur um die Rille herum konkav oder konvex ist, wobei die Auslegerfedern (11, 12) benachbart zu dem zentralen Abschnitt der entsprechenden der zwei horizontalen Drehverlängerungen fest verbunden sind.

2. Multifunktionsstütze nach Anspruch 1,
wobei der in Querrichtung verlaufende zentrale Abschnitt (1) einen Doppel-T-Querschnitt aufweist und Halteverlängerungen (9, 10) umfasst, die bezüglich des in Querrichtung verlaufenden zentralen Abschnitts im Innern des Doppel-T-Querschnitts in der Nähe der in Längsrichtung verlängernden Enden (1.2, 1.3) schräg ausgerichtet sind, wobei die Halteverlängerungen (9, 10) in der Lage sind, mit einem Ende zweier Paare von Querstangen (21, 22, 23, 24) verbunden zu werden, wobei das andere Ende mit zwei oberen Stützen (25, 26) verbunden ist, die zentral aus den zwei Oberseiten der Achsen (13, 14) hervortreten.

3. Multifunktionsstütze nach Anspruch 1,
wobei die Halteenden (3.1, 4.1) der zwei im Wesentlichen vertikalen länglichen Arme (3, 4) in der Lage sind, mit einem Ende von Längsstangen (15, 16) verbunden zu werden, wobei das andere Ende der Längsstangen mit den Unterseiten der Enden der Achsen (13, 14) verbunden ist.

4. Multifunktionsstütze nach Anspruch 2,
wobei der Doppel-T-Querschnitt des in Querrichtung verlaufenden zentralen Abschnitts (1) in Längsrichtung in zwei Hälften geteilt ist, die miteinander verbunden sind.

5. Multifunktionsstütze nach Anspruch 1,
wobei das Halteende (3.1, 4.1) der zwei im Wesentlichen vertikalen länglichen Arme (3, 4) eine umgedrehte U-Form aufweist.

6. Multifunktionsstütze nach einem der vorstehenden Ansprüche in der Form einer einteiligen Π-förmigen Struktur aus Gusseisen.

## Revendications

1. Support multifonction d'une suspension à ressorts en porte-à-faux dans un véhicule, particulièrement avec deux essieux, le support multifonction comprenant :
- une partie centrale transversale (1), avec deux terminaisons allongées longitudinalement (1.2, 1.3) à raccorder à des organes longitudinaux allongés respectifs (2) d'un châssis du véhicule ;
- deux bras allongés sensiblement verticaux (3, 4) avec une terminaison de maintien respective (3.1, 4.1), sous lesdites deux terminaisons allongées longitudinalement (1.2, 1.3) ;
- deux extensions de pivot sensiblement horizontal (5, 6) partant des deux bras allongés sensiblement verticaux, vers l'extérieur du support multifonction ;
ledit support multifonction étant **caractérisé en ce que** lesdites deux extensions de pivot sensiblement horizontal (5, 6) ont une surface latérale comprenant deux parties coniques tronquées (5.1, 5.2 ; 6.1, 6.2), se faisant face l'une l'autre, avec une gorge annulaire centrale (7, 8), la forme globale du contour de la gorge étant concave ou convexe, lesdits ressorts en porte-à-faux (11, 12) étant fermement raccordés approximativement à la partie centrale de l'extension respective desdites deux extensions de pivotement horizontal.

2. Support multifonction selon la revendication 1, dans lequel ladite partie centrale transversale (1) a une section en T double, et comprend des extensions de maintien (9, 10) orientées obliquement par rapport à ladite partie centrale transversale, à l'intérieur de ladite section en T double, près desdites terminaisons allongées longitudinalement (1.2, 1.3), lesdites extensions de maintien (9, 10) étant capables de raccorder une extrémité des deux couples de tiges transversales (21, 22, 23, 24), l'autre extrémité raccordant deux supports supérieurs (25, 26) émergeant de façon centrale depuis le côté supérieur desdits essieux (13, 14).

3. Support multifonction selon la revendication 1, dans lequel lesdites terminaisons de maintien (3.1, 4.1) desdits deux bras allongés sensiblement verticaux (3, 4) sont capables de raccorder une extrémité des tiges longitudinales (15, 16), l'autre extrémité des tiges longitudinales étant raccordée aux côtés inférieurs des terminaisons desdits essieux (13, 14).

4. Support multifonction selon la revendication 2, dans lequel ladite section en T double de la partie centrale transversale (1) est divisée longitudinalement en deux moitiés raccordées ensemble.

5. Support multifonction selon la revendication 1, dans lequel ladite terminaison de maintien (3.1, 4.1) des deux bras allongés sensiblement verticaux (3, 4) sont en forme de U renversé.

6. Support multifonction selon l'une quelconque des revendications précédentes, sous forme d'une structure en forme de Π en fonte monobloc.
